# EUROPEAN PATENT SPECIFICATION

(11) **EP 2 974 921 B1**
(45) Date of publication and mention of the grant of the patent: **17.01.2018**
(21) Application number: 15172268.3
(22) Date of filing: 16.06.2015
(51) Int. Cl.: B60S 1/52, B60S 1/34

(54) **WIPER DEVICE FOR CLEANING A VEHICLE WINDOW AND WIPER BLADE FOR A WIPER DEVICE**
WISCHERVORRICHTUNG ZUR REINIGUNG EINER FAHRZEUGSCHEIBE UND WISCHERBLATT FÜR EINE WISCHERVORRICHTUNG
DISPOSITIF D'ESSUIE-GLACE PERMETTANT DE NETTOYER UNE VITRE DE VÉHICULE ET BALAI D'ESSUIE-GLACE POUR UN DISPOSITIF ESSUIE-GLACE

(30) Priority: 17.07.2014 DE 102014110064
(43) Date of publication of application: 20.01.2016
(73) Proprietor: Valeo Systèmes d'Essuyage, 78322 Le Mesnil Saint Denis (FR)
(72) Inventor: Schaeuble, Michael, 71665 VAIHINGEN/ENZ (DE)
(74) Representative: Callu Danseux, Violaine

(56) References cited:
- DE-A1-102012 107 231
- US-A1- 2012 036 671

## Description

### Prior Art

The invention relates to a wiper device for cleaning a vehicle window according to the precharacterizing clause of Claim 1. Furthermore, the invention relates to a wiper blade for a wiper device according to the invention.

A wiper device according to the precharacterizing clause of Claim 1 is known from the applicant's DE 10 2012 107 231 A1. The known wiper device has a holding element which is fastened non-rotatably in particular at an end of a wiper shaft projecting out of the body of a vehicle. An adapter element which carries a wiper arm with a wiper blade or is connected thereto is mounted pivotably on the holding element. It is essential here that the angular position of the adapter element with respect to the holding element can be influenced in the swivel axis by a detent connection. In a first position, in which the detent connection is constructed between the holding element and the adapter element, the wiper arm or the wiper blade is in the wiping position thereof, for cleaning the vehicle window, in which the wiper blade bears against the vehicle window. After the detent connection is released, the adapter element together with the wiper arm and the wiper blade can be pivoted about the swivel axis thereof on the holding element in order, for example, to be able to exchange the wiper blade (service position). It is therefore provided that, even when the detent connection between the holding element and the adapter element is released, the adapter element is always connected to the holding element. The wiper blade or the wiper arm can therefore be exchanged only in the region of the vehicle or of the wiper shaft.

### Summary of the Invention

Starting from the depicted prior art, the invention is based on the object of developing a wiper device for cleaning a vehicle window according to the precharacterizing clause of Claim 1 in such a manner that an alternative possibility for exchanging the wiper arm or the wiper blade is made possible. This object is achieved, according to the invention, in a wiper device for cleaning a vehicle window with the features of Claim 1 in that between the holding element and the adapter element a detent connection is constructed, which in a first position arrests the adapter element with the wiper arm in a wiping position on the wiper shaft such that torque can be transmitted by the wiper shaft via the holding element and the adapter element to the wiper arm. In a dismantling position, the adapter element with the wiper arm can be released from the holding element. Put in other words, this means that a deactivation of the detent connection between the holding element and the adapter element has the effect that the entire wiper arm (together with the adapter element) can be removed from the wiper shaft - without the use of a tool - and similarly can be fastened to said wiper shaft again in a reverse sequence of the dismantling. As a result, for example, in the event of relatively poor accessibility of the wiper blade in the region of the vehicle, particularly simple exchange of the wiper blade can be made possible since said exchange no longer has to take place directly at the vehicle.

Advantageous developments of the wiper device according to the invention for cleaning a vehicle window are stated in the dependent claims. All combinations of at least two features disclosed in the claims, the description and/or the figures fall within the scope of the invention.

In order to be able to form a swivel axis without separate components, for example in the form of a bolt-shaped element or the like, in a structurally particularly simple manner, it is provided that the adapter element has an extension arranged in the swivel axis, which extension engages in a form-fitting manner into a recess arranged on the holding element. The two elements therefore together form an in particular flat rotary joint. This means that the extension is mounted pivotably within the recess. Since the holding element and the adapter element are customarily designed as injection-moulded plastics parts, it is possible in a particularly simple and economically advantageous manner to form the swivel axis for the adapter element by an integral arrangement of the extension or of the recess.

In a refinement which is preferred in respect of strength and kinematics, the extension (for the swivel axis) is arranged on the side of the wiper shaft lying opposite the wiper blade, and the detent connection is arranged on the adapter element on the side of the adapter element facing the wiper blade. The extension and the detent connection are therefore arranged on sides of the wiper shaft facing away from each other, as a result of which a relatively large distance is obtained between the swivel axis and the detent connection. This makes it possible for the adapter element to be arranged on the holding element in a stiff manner with particularly little play.

In order to arrange the wiper arm or the wiper blade on the wiper shaft for conjoint rotation so that movements of the wiper shaft can be transmitted to the wiper blade directly and in a manner free from play, it is provided that between the adapter element and the holding element a form-fitting connection is constructed, which positions the adapter element securely as regards rotation angle with respect to the longitudinal axis of the wiper shaft.

In a structural development of this concept, it is provided that, for the construction of the form-fitting connection, the holding element is covered at least partially by the adapter element, wherein wall sections of the adapter element lie against side faces of the holding element.

In a structurally preferred refinement of the detent connection, it is provided that the detent connection comprises a movable first blocking element, acted upon by force by a spring element, which first blocking element cooperates in a blocking position with a fixedly arranged second blocking element.

In particular, it is provided here that on the first and/or second blocking element counter to the direction of movement of the first blocking element at least one obliquely arranged guide face is constructed, which on swivelling of the adapter element from the dismantling position into the operating position, bring about a movement of the first blocking element into its blocking position. Such a construction of the detent connection therefore makes it possible, when pivoting the wiper arm back out of the service position thereof into the operating position, to permit latching or locking of the detent connection, in which the wiper arm or the wiper blade is held in the operating position thereof. Therefore, an (additional) manual actuation of the detent connection by the operator is not required. Particularly convenient operation of the wiper device is thereby made possible.

In a structural refinement or arrangement of the detent connection, it is furthermore of advantage if the first blocking element and the spring element are arranged together in the adapter element, and if the first blocking element cooperates at least indirectly with an actuating element, wherein the actuating element permits a manual adjustment of the first blocking element from the blocking position into a dismantling position following the adapter element.

The swivel axis about which the adapter element can be pivoted rotatably is arranged perpendicularly to the longitudinal axis (rotation axis) of the wiper shaft. The swivel axis here can be spaced apart from the longitudinal axis.

In particular, it is provided here that the actuating element (actuating button) is arranged on the side of the wiper shaft lying opposite the swivel axis. This means arranging same on the side facing away from the swivel axis, from a viewing direction onto the longitudinal axis of the wiper shaft. Such an arrangement permits an intuitive operation or an intuitive pivoting of the wiper arm from the operating position into the service position.

In addition to conventional wiper devices which have, for example, separate spray openings arranged in the region of the body for applying a washing fluid or cleaning fluid onto the vehicle window, the prior art also discloses wiper devices in which the corresponding spray openings are arranged in the region of the wiper arm or of the wiper blade. In order also to make a wiper device according to the invention usable for applications of this type, it is provided, in a further refinement of the invention, that the wiper shaft is constructed as a hollow shaft, that a supply line for a washing fluid is arranged in the hollow shaft, that the wiper blade or the wiper arm has at least one spray opening for applying the washing fluid onto the vehicle window, wherein the spray opening is connected hydraulically with the supply line.

The holding element and the wiper shaft are preferably connected by means of a clamping connection, which comprises a clamping screw for fixing the holding element on an end section of the wiper shaft.

For the axially correct positioning of the holding element on the wiper shaft, it can be provided that the holding element has an axial stop element for the holding element, which at least partially covers a front face of the wiper shaft. Such an arrangement or construction of the stop element makes it possible in a particularly simple manner, by depressing or moving the holding element in the direction of the wiper shaft in such a manner that the stop element lies against the front face of the wiper shaft, to enable the correct axial position of the holding element, and therefore of the wiper arm and the wiper blade, on the wiper shaft. In order to fasten the wiper blade to the adapter element, the adapter element preferably has a mount. Said mount can be designed, for example, as a slot in the form of a blind hole, and therefore a locking clamping connection or the like can be formed between an end region of the wiper blade and the mount.

The invention also comprises an assembly comprising a wiper device according to the invention and a wiper blade, wherein the wiper blade is able to be introduced into a mount of the adapter element.

Further advantages, features and details of the invention emerge from the description below of preferred exemplary embodiments and with reference to the drawing.

In the drawing:
- Fig.: 1 shows a perspective illustration of the components of a wiper device according to the invention for cleaning a vehicle window,
- Fig. 2 and Fig. 3: show the installation steps for fastening an adapter element to a holding element of the wiper device, in each case in longitudinal section,
- Fig.: 4 shows a perspective illustration of the holding element and the adapter element of the wiper device in a state separated from each other, and
- Fig. 5 to Fig. 8: show the connection between the adapter element and the holding element of the wiper device in various positions and sectional illustrations in order to explain the latching mechanism between the adapter element and the holding element.

Identical elements or elements with the same function are provided with the same reference numbers in the figures.

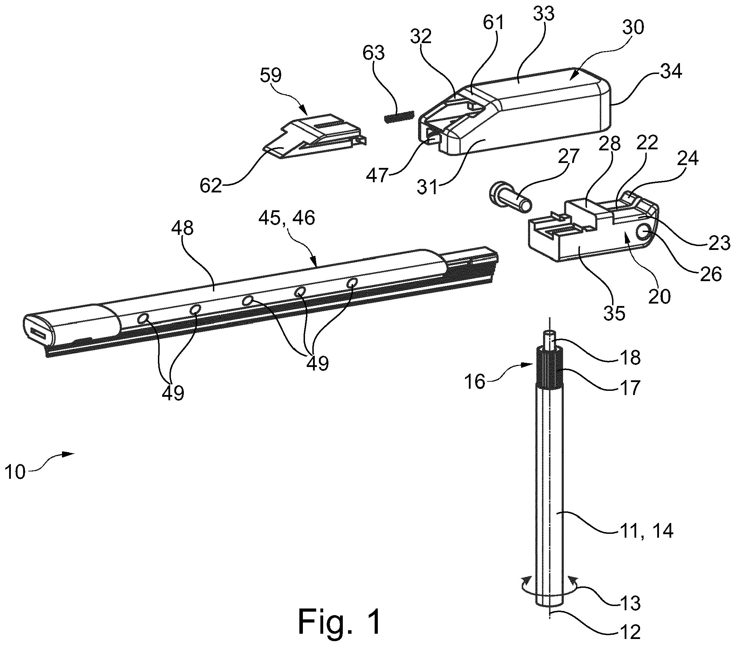

The wiper device 10 illustrated in Fig. 1 serves for cleaning a vehicle window (not illustrated), in particular a rear window of the vehicle. The wiper device 10 comprises a wiper shaft 11 which is movable to and fro about a longitudinal axis 12 in a manner corresponding to the double arrow 13 by means of a drive (not illustrated). In the exemplary embodiment illustrated, the wiper shaft 11 is designed as a hollow shaft 14 and has a fluting 17 on an end section 16 in order to increase friction. Furthermore, a fluid line 18 for feeding a washing or cleaning fluid onto the vehicle window projects from the end section 16.

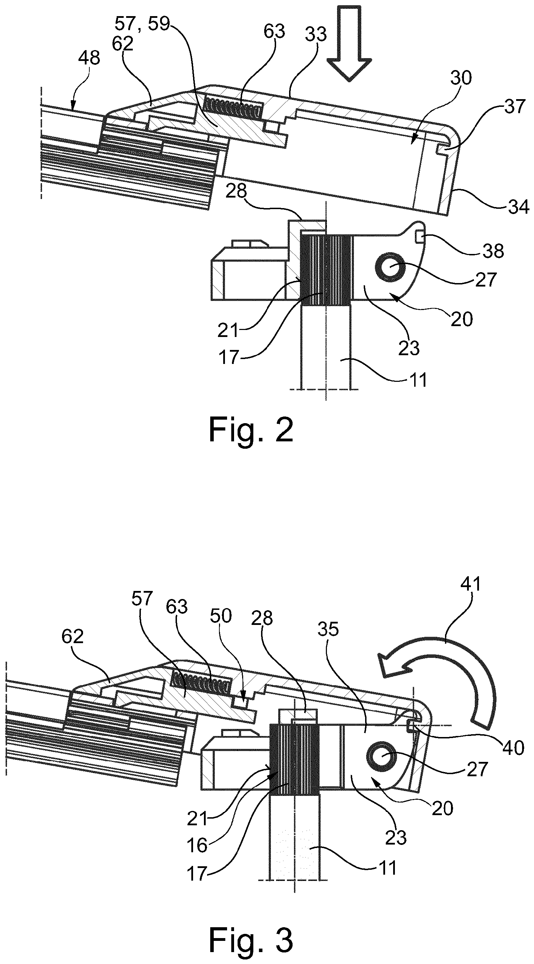

The wiper shaft 11 is connected in the region of the end section 16 thereof, in particular in the region of the fluting 17, to a holding element 20. As can be seen in particular with reference to Figs. 2 and 3, the holding element 20, which is at least partially composed of plastic and is produced, for example, by injection moulding, has a bore section 21 which is matched to the outside diameter of the end section 16 of the wiper shaft 11. Furthermore, the holding element 20 has a continuous longitudinal slot 22 which opens in the region of the bore section 21 and is aligned with the wiper shaft 11. The two clamping arms 23, 24 of the holding element 20, which clamping arms are separated from each other by the longitudinal slot 22, serve for forming a clamping connection between the holding element 20 or the bore section 21 of the holding element 20 and the end section 16 of the wiper shaft 11. For this purpose, the two clamping sections 23, 24 are penetrated by a transverse bore 26 into which a clamping screw 27 can be screwed, the clamping screw drawing the two clamping sections 23, 24 together with the formation of a clamping connection in the region of the end section 16 of the wiper shaft 11.

On the upper side of the holding element 20, a stop element 28 which at least partially covers the bore section 21 is integrally formed on the holding element 20 in the region of the bore section 21. The stop element 28 serves for setting the correct axial position of the holding element 20 on the end section 16 of the wiper shaft 11, wherein, in the desired position of the holding element 20 on the wiper shaft 11, the lower side of the stop element 28 bears against the facing front face of the wiper shaft 11 in a manner corresponding to the illustration of Figs. 2 and 3.

The holding element 20 is arranged in operative connection to an adapter element 30 which is likewise at least partially composed of plastic and designed as injection moulded part. The adapter element 30 at least substantially covers the holding element 20. For this purpose, the adapter element 30 has two side walls 31, 32 arranged parallel to each other, and an upper wall 33 and a rear wall 34. When the adapter element 30 is mounted on the holding element 20, the two side walls 31, 32 bear against corresponding side walls 35 of the holding element 20 such that the adapter element 30 is arranged securely as regards rotation angle with respect to the holding element 20, and, by means of the clamping connection between the holding element 20 and the wiper shaft 11, is also arranged securely as regards rotation angle with respect to the wiper shaft 11.

On the rear wall 34 of the adapter element 30, an extension 37 which is arranged transversely with respect to the extent of the adapter element 30 is formed in the vicinity of the upper wall 33. The extension 37 engages in an in particular partially circular recess 38, which is formed on the holding element 20 in the region of the two clamping sections 23, 24, in such a manner that the adapter element 30 is mounted pivotably in a manner free from play about a certain angle about the centre point of the recess 38 in a swivel axis 40 in a manner corresponding to the arrow 41. Furthermore, the axial movability of the adapter element 30 with respect to the holding element 20 in the region of the recess 38 is restricted by the recess 38 in conjunction with the extension 37.

The adapter element 30 is connected to a wiper blade 45 or to a wiper arm 46 on the side facing away from the extension 37. For this purpose, the adapter element 30 has a recess which is in the form of a longitudinal slot and in the manner of a blind hole for forming a mount 47 into which the wiper blade 45 can be pushed with the end region thereof facing the adapter element 30, for example with the formation of a clamping connection. The wiper blade 45 is covered by a covering 48 as part of the wiper arm 46, in which a row of spray openings 49 serving for applying the washing or cleaning fluid onto the vehicle window is formed. For this purpose, the fluid line 18 is hydraulically connected to the holding element 20 and the adapter element 30 in a manner which is not shown, wherein the adapter element 30 is hydraulically coupled in turn to the covering 48.

In order to exchange, for example, the wiper blade 45 on the wiper device 10, it is provided that the wiper blade 45 is designed to be removable together with the adapter element 30 from the holding element 20. For this purpose, a detent connection 50 is provided between the holding element 20 and the adapter element 30.

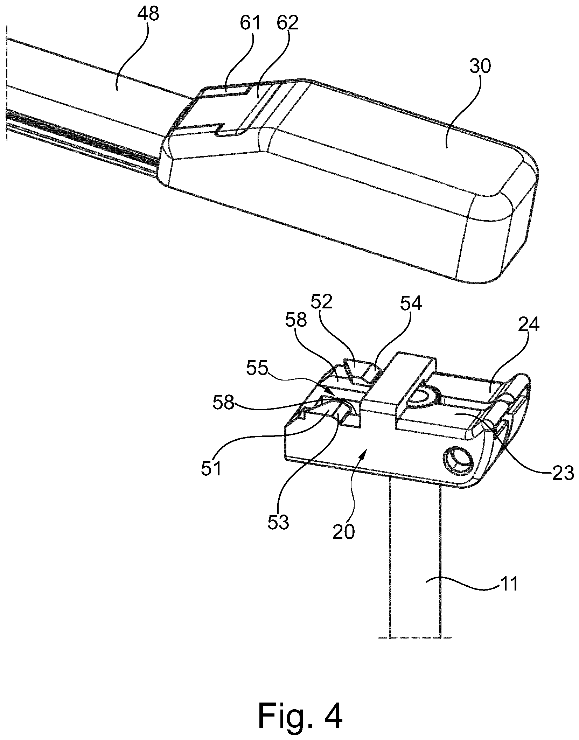

As can be seen in particular with reference to Fig. 4, the detent connection 50 comprises, in an extension of the two clamping sections 23, 24 on that side of the clamping sections 23, 24 which lies opposite the wiper shaft 11, two first blocking elements 51, 52 which, on the side facing the wiper shaft 11, have two obliquely arranged guide faces 53, 54. The two first blocking elements 51, 52 partially cover a receiving space 55 for a second blocking element 57 arranged or formed on the adapter element 30. The receiving space 55 is bounded laterally by a respective side wall 58.

Within the adapter element 30, the detent connection 50 has the second blocking element 57 in the form of a blocking slide 59 which, on an obliquely arranged front side 61 of the adapter element 30, on the side lying opposite the rear wall 34 of the adapter element 30, forms a blocking button 62 as an actuating element. The blocking button 62 or the blocking slide 59 can be pressed into the adapter element 30 in a direction arranged perpendicularly to the longitudinal axis 12 from the position illustrated in Fig. 4 counter to the spring force of a compression spring 63 arranged within the adapter element 30.

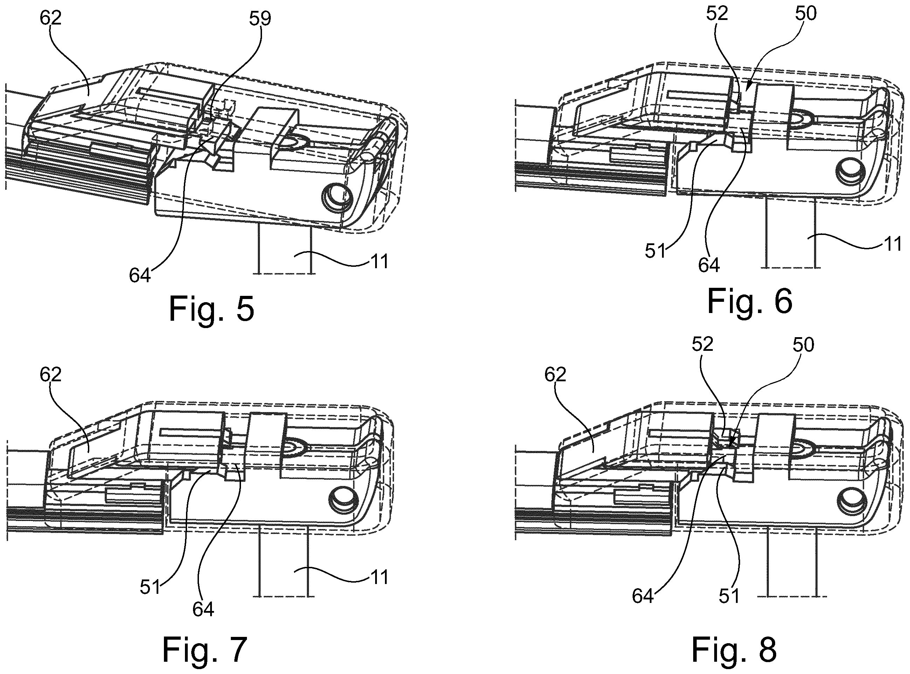

The process of installation of the adapter element 30 on the holding element 20 takes place as follows: first of all, according to Figs. 2 and 3, the adapter element 30 is placed onto the holding element 20 in such a manner that the extension 37 of the adapter element 30 engages in the recess 38 of the holding element 20. The adapter element 30 is subsequently pivoted about the swivel axis 40 in a manner corresponding to the arrow 41. In the process, an extension 64 which is formed on the blocking slide 59 and initially covers the two first blocking elements 51, 52 slides along the guide faces 53, 54 and in the direction of the wiper shaft 11 counter to the spring force of the compression spring 63 (Fig. 5). As soon as the extension 64 has overcome the region of the first blocking elements 51, 52, the extension 64 passes downwards into the region of the receiving space 55 (as the adapter element 30 pivots further about the swivel axis 39). In the process, the blocking slide 59 is pressed again in the original direction thereof pointing away from the wiper shaft 11 by the spring force of the compression spring 63 such that the extension 64 is moved into the receiving space 55 below the first blocking elements 51, 52. The two first blocking elements 51, 52, by the lower side thereof facing the extension 64, here form stop elements which prevent the adapter element 30 from pivoting about the swivel axis 39 (sequence of Figures 6 to 8). In the end position of the adapter element 30 that is illustrated in Fig. 8, the adapter element 30 or the wiper blade 45 is in the operating position thereof, in which the wiper blade 45 is arranged in bearing contact with the vehicle window.

The wiper device 10 described to this extent can be modified in diverse ways without departing from the inventive concept.

### List of Reference Numbers

- 10: Wiper device
- 11: Wiper shaft
- 12: Longitudinal axis
- 13: Double arrow
- 14: Hollow shaft
- 16: End section
- 17: Fluting
- 18: Fluid line
- 20: Holding element
- 21: Bore section
- 22: Longitudinal slot
- 23: Clamping arm
- 24: Clamping arm
- 26: Transverse bore
- 27: Clamping screw
- 28: Stop element
- 30: Adapter element
- 31: Side wall
- 32: Side wall
- 33: Wall
- 34: Rear wall
- 35: Side wall
- 37: Extension
- 38: Recess
- 40: Swivel axis
- 41: Arrow
- 45: Wiper blade
- 46: Wiper arm
- 47: Mount
- 48: Covering
- 49: Spray opening
- 50: Detent connection
- 51: Blocking element
- 52: Blocking element
- 53: Guide face
- 54: Guide face
- 55: Receiving space
- 57: Blocking element
- 58: Side wall
- 59: Blocking slide
- 61: Front side
- 62: Blocking button
- 63: Compression spring
- 64: Extension

## Claims

1. Wiper device (10) for cleaning a vehicle window, with a wiper shaft (11) and with a holding element (20), fastened on the wiper shaft (11), with an adapter element (30) which is connected to the holding element (20) and to which a wiper arm (46) and a wiper blade (45) arranged on the wiper arm (46) are fastened, wherein the adapter element (30) is mounted about a swivel axis (40) arranged perpendicularly to the longitudinal axis (12) of the wiper shaft (11),
**characterized in that**
between the holding element (20) and the adapter element (30) a detent connection (50) is constructed, which in a first position arrests the adapter element (30) with the wiper arm (46) in a wiping position on the wiper shaft (11), and in a dismantling position enables a releasing of the adapter element (30) with the wiper arm (46) from the holding element (20).

2. Wiper device according to Claim 1,
**characterized in that**
the adapter element (30) has an extension (37) arranged in the swivel axis (40), which extension engages in a form-fitting manner into a recess (38) arranged on the holding element (20).

3. Wiper device according to Claim 2,
**characterized in that**
the extension (37) is arranged on the side of the wiper shaft (11) lying opposite the wiper blade (45), and **in that** the detent connection (50) is arranged on the adapter element (30) on the side of the adapter element (30) facing the wiper blade (45) .

4. Wiper device according to one of Claims 1 to 3,
**characterized in that**
between the adapter element (30) and the holding element (20) a form-fitting connection is constructed, which positions the adapter element (30) securely as regards rotation angle with respect to the longitudinal axis (12) of the wiper shaft (11).

5. Wiper device according to Claim 4,
**characterized in that**
for the construction of the form-fitting connection, the holding element (20) is covered at least partially by the adapter element (30), wherein side walls (31, 32) of the adapter element (30) lie against side faces (35) of the holding element (20) .

6. Wiper device according to one of Claims 1 to 5,
**characterized in that**
the detent connection (50) comprises a movable first blocking element (57), acted upon by force by a spring element (63), which first blocking element cooperates in a blocking position with at least one fixedly arranged second blocking element (51, 52).

7. Wiper device according to Claim 6,
**characterized in that**
on the first and/or second blocking element (51, 52, 57) opposite the direction of movement of the first blocking element (57) at least one obliquely arranged guide face (53, 54) is constructed, which on swivelling of the adapter element (30) from the dismantling position into the operating position bring about a movement of the first blocking element (57) into its blocking position.

8. Wiper device according to Claim 6 or 7,
**characterized in that**
the first blocking element (57) and the spring element (63) are arranged together in the adapter element (30), and **in that** the first blocking element (57) cooperates at least indirectly with an actuating element (62), wherein the actuating element (62) permits a manual adjustment of the first blocking element (57) from the blocking position into a dismantling position freeing the adapter element (30).

9. Wiper device according to Claim 8,
**characterized in that**
the actuating element (62) is arranged on the side of the wiper shaft (11) lying opposite the swivel axis (40).

10. Wiper device according to one of Claims 1 to 9,
**characterized in that**
the wiper shaft (11) is constructed as a hollow shaft (14), **in that** a supply line (18) for a washing fluid is arranged in the hollow shaft (14), **in that** the wiper blade (45) or the wiper arm (46) has at least one spray opening (49) for applying the washing fluid onto the vehicle window, wherein the spray opening (49) is connected hydraulically with the supply line (18).

11. Wiper device according to one of Claims 1 to 10,
**characterized in that**
the holding element (20) is connected with the wiper shaft (11) by means of a clamping connection, which comprises a clamping screw (27) for fixing the holding element (20) on an end section (16) of the wiper shaft (11).

12. Wiper device according to one of Claims 1 to 11,
**characterized in that**
the holding element (20) has an axial stop element (28) for the holding element (20), which at least partially covers a front face of the wiper shaft (11) .

13. Wiper device according to one of Claims 5 to 12,
**characterized in that**
the adapter element (30) has a mount (47) for fastening the wiper blade (45).

14. Assembly comprising a wiper device (10) according to one of Claims 1 to 13 and a wiper blade (45), wherein the wiper blade (45) is able to be introduced into a mount (47) of the adapter element (30) .

## Patentansprüche

1. Wischvorrichtung (10) zum Reinigen einer Fahrzeugscheibe, mit einer Wischerwelle (11) und einem an der Wischerwelle (11) befestigten Halteelement (20), mit einem mit dem Halteelement (20) verbundenen Adapterelement (30), an dem ein Wischarm (46) und ein an dem Wischarm (46) angeordnetes Wischblatt (45) befestigt sind, wobei das Adapterelement (30) um eine senkrecht zur Längsachse (12) der Wischerwelle (11) angeordnete Schwenkachse (40) gelagert ist,
**dadurch gekennzeichnet,**
**dass** zwischen dem Halteelement (20) und dem Adapterelement (30) eine Rastverbindung (50) ausgebildet ist, die in einer ersten Stellung das Adapterelement (30) mit dem Wischarm (46) in einer Wischstellung auf der Wischerwelle (11) arretiert und in einer Demontagestellung ein Lösen des Adapterelements (30) mit dem Wischarm (46) vom Halteelement (20) ermöglicht.

2. Wischvorrichtung nach Anspruch 1,
**dadurch gekennzeichnet,**
**dass** das Adapterelement (30) einen in der Schwenkachse (40) angeordneten Fortsatz (37) aufweist, der in eine am Halteelement (20) angeordnete Ausnehmung (38) formschlüssig eingreift.

3. Wischvorrichtung nach Anspruch 2,
**dadurch gekennzeichnet,**
**dass** der Fortsatz (37) auf der dem Wischblatt (45) gegenüberliegenden Seite der Wischerwelle (11) angeordnet ist, und dass die Rastverbindung (50) am Adapterelement (30) auf der dem Wischblatt (45) zugewandten Seite des Adapterelements (30) angeordnet ist.

4. Wischvorrichtung nach einem der Ansprüche 1 bis 3,
**dadurch gekennzeichnet,**
**dass** zwischen dem Adapterelement (30) und dem Halteelement (20) eine Formschlußverbindung ausgebildet ist, die das Adapterelement (30) zur Längsachse (12) der Wischerwelle (11) drehwinkelfest positioniert.

5. Wischvorrichtung nach Anspruch 4,
**dadurch gekennzeichnet,**
**dass** zur Ausbildung der Formschlußverbindung das Halteelement (20) von dem Adapterelement (30) zumindest bereichsweise überdeckt ist, wobei Seitenwände (31, 32) des Adapterelements (30) an Seitenflächen (35) des Halteelements (20) anliegen.

6. Wischvorrichtung nach einem der Ansprüche 1 bis 5,
**dadurch gekennzeichnet,**
**dass** die Rastverbindung (50) ein von einem Federelement (63) kraftbeaufschlagtes, bewegliches erstes Rastelement (57) umfasst, das in einer Sperrstellung mit wenigstens einem ortsfest angeordneten zweiten Rastelement (51, 52) zusammenwirkt.

7. Wischvorrichtung nach Anspruch 6,
**dadurch gekennzeichnet,**
**dass** an dem ersten und/oder zweiten Rastelement (51, 52, 57) gegenüber der Bewegungsrichtung des ersten Rastelements (57) wenigstens eine schräg angeordnete Führungsfläche (53, 54) ausgebildet ist, die beim Schwenken des Adapterelements (30) aus der Demontagestellung in die Betriebsstellung eine Bewegung des ersten Rastelements (57) in seine Sperrstellung bewirken.

8. Wischvorrichtung nach Anspruch 6 oder 7,
**dadurch gekennzeichnet,**
**dass** das erste Rastelement (57) zusammen im dem Federelement (63) in dem Adapterelement (30) angeordnet sind, und dass das erste Rastelement (57) zumindest mittelbar mit einem Betätigungselement (62) zusammenwirkt, wobei das Betätigungselement (62) eine manuelle Verstellung des ersten Rastelements (57) von der Sperrstellung in eine das Adapterelement (30) freigebende Demontageposition erlaubt.

9. Wischvorrichtung nach Anspruch 8,
**dadurch gekennzeichnet,**
**dass** das Betätigungselement (62) auf der der Schwenkachse (40) gegenüberliegenden Seite der Wischerwelle (11) angeordnet ist.

10. Wischvorrichtung nach einem der Ansprüche 1 bis 9,
**dadurch gekennzeichnet,**
**dass** die Wischerwelle (11) als Hohlwelle (14) ausgebildet ist, dass in der Hohlwelle (14) eine Versorgungsleitung (18) für eine Waschflüssigkeit angeordnet ist, und dass das Wischblatt (45) oder der Wischarm (46) wenigstens eine Sprühöffnung (49) zum Aufbringen der Waschflüssigkeit auf die Fahrzeugscheibe aufweist, wobei die Sprühöffnung (49) hydraulisch mit der Versorgungsleitung (18) verbunden ist.

11. Wischvorrichtung nach einem der Ansprüche 1 bis 10,
**dadurch gekennzeichnet,**
**dass** das Halteelement (20) mit der Wischerwelle (11) mittels einer Klemmverbindung verbunden ist, die eine Klemmschraube (27) zum Fixieren des Halteelements (20) auf einem Endabschnitt (16) der Wischerwelle (11) umfasst.

12. Wischvorrichtung nach einem der Ansprüche 1 bis11,
**dadurch gekennzeichnet,**
**dass** das Halteelement (20) ein axiales Anschlagelement (28) für das Halteelement (20) aufweist, das eine Stirnseite der Wischerwelle (11) zumindest bereichsweise überdeckt.

13. Wischvorrichtung nach einem der Ansprüche 5 bis 12,
**dadurch gekennzeichnet,**
**dass** das Adapterelement (30) eine Aufnahme (47) zur Befestigung des Wischblatts (45) aufweist.

14. Anordnung, umfassend eine Wischvorrichtung (10) nach einem der Ansprüche 1 bis 13 und ein Wischblatt (45), wobei das Wischblatt (45) dazu ausgebildet ist, in eine Aufnahme (47) des Adapterelements (30) eingeführt zu werden.

## Revendications

1. Dispositif à essuie-glace (10) pour nettoyer une glace de véhicule, avec un arbre d'essuie-glace (11) et avec un élément de retenue (20), attaché sur l'arbre d'essuie-glace (11), avec un élément adaptateur (30) qui est raccordé à l'élément de retenue (20) et auquel un bras d'essuie-glace (46) et un balai d'essuie-glace (45) agencé sur le bras d'essuie-glace (46) sont attachés, dans lequel l'élément adaptateur (30) est monté autour d'un axe de pivotement (40) agencé perpendiculairement à l'axe longitudinal (12) de l'arbre d'essuie-glace (11),
**caractérisé en ce que**
entre l'élément de retenue (20) et l'élément adaptateur (30) un raccord à encliquetage (50) est construit, qui, dans une première position, arête l'élément adaptateur (30) avec le bras d'essuie-glace (46) dans une position d'essuyage sur l'arbre d'essuie-glace (11), et, dans une position de démontage, permet une libération de l'élément adaptateur (30) avec le bras d'essuie-glace (46) à partir de l'élément de retenue (20).

2. Dispositif à essuie-glace selon la revendication 1,
**caractérisé en ce que**
l'élément adaptateur (30) possède une extension (37) agencée dans l'axe de pivotement (40), laquelle extension s'engage, de manière épousant la forme, dans un évidement (38) agencé sur l'élément de retenue (20).

3. Dispositif à essuie-glace selon la revendication 2,
**caractérisé en ce que**
l'extension (37) est agencée sur le côté de l'arbre d'essuie-glace (11) se trouvant à l'opposé du balai d'essuie-glace (45), et **en ce que** le raccord à encliquetage (50) est agencé sur l'élément adaptateur (30) sur le côté de l'élément adaptateur (30) faisant face au balai d'essuie-glace (45).

4. Dispositif à essuie-glace selon l'une des revendications 1 à 3,
**caractérisé en ce que**
entre l'élément adaptateur (30) et l'élément de retenue (20) un raccord épousant la forme est construit, qui positionne l'élément adaptateur (30) fermement en ce qui concerne un angle de rotation par rapport à l'axe longitudinal (12) de l'arbre d'essuie-glace (11).

5. Dispositif à essuie-glace selon la revendication 4,
**caractérisé en ce que**
pour la construction du raccord épousant la forme, l'élément de retenue (20) est couvert au moins partiellement par l'élément adaptateur (30), dans lequel des parois latérales (31, 32) de l'élément adaptateur (30) se trouvent contre des faces latérales (35) de l'élément de retenue (20).

6. Dispositif à essuie-glace selon l'une des revendications 1 à 5,
**caractérisé en ce que**
le raccord à encliquetage (50) comprend un premier élément de blocage mobile (57), sur lequel agit, de force, un élément à ressort (63), lequel premier élément de blocage coopère dans une position de blocage avec au moins un second élément de blocage agencé de façon fixe (51, 52).

7. Dispositif à essuie-glace selon la revendication 6,
**caractérisé en ce que**
sur les premier et/ou second éléments de blocage (51, 52, 57), à l'opposé de la direction de mouvement du premier élément de blocage (57), au moins une face de guidage agencée obliquement (53, 54) est construite, qui, lors du pivotement de l'élément adaptateur (30) de la position de démontage à la position de fonctionnement entraîne un mouvement du premier élément de blocage (57) dans sa position de blocage.

8. Dispositif à essuie-glace selon la revendication 6 ou 7,
**caractérisé en ce que**
le premier élément de blocage (57) et l'élément à ressort (63) sont agencés ensemble dans l'élément adaptateur (30), et **en ce que** le premier élément de blocage (57) coopère au moins indirectement avec un élément d'actionnement (62), dans lequel l'élément d'actionnement (62) permet un ajustement manuel du premier élément de blocage (57) de la position de blocage à une position de démontage libérant l'élément adaptateur (30).

9. Dispositif à essuie-glace selon la revendication 8,
**caractérisé en ce que**
l'élément d'actionnement (62) est agencé sur le côté de l'arbre d'essuie-glace (11) se trouvant à l'opposé de l'axe de pivotement (40).

10. Dispositif à essuie-glace selon l'une des revendications 1 à 9,
**caractérisé en ce que**
l'arbre d'essuie-glace (11) est construit sous forme d'arbre creux (14), **en ce qu'**une conduite d'alimentation (18) pour un fluide de lavage est agencée dans l'arbre creux (14), **en ce que** le balai d'essuie-glace (45) ou le bras d'essuie-glace (46) possède au moins une ouverture de pulvérisation (49) pour appliquer le fluide de lavage sur la glace de véhicule, dans lequel l'ouverture de pulvérisation (49) est raccordée hydrauliquement à la conduite d'alimentation (18).

11. Dispositif à essuie-glace selon l'une des revendications 1 à 10,
**caractérisé en ce que**
l'élément de retenue (20) est raccordé à l'arbre d'essuie-glace (11) au moyen d'un raccord à serrage, qui comprend une vis de serrage (27) pour fixer l'élément de retenue (20) sur une section d'extrémité (16) de l'arbre d'essuie-glace (11).

12. Dispositif à essuie-glace selon l'une des revendications 1 à 11,
**caractérisé en ce que**
l'élément de retenue (20) possède un élément d'arrêt axial (28) pour l'élément de retenue (20), qui couvre au moins partiellement une face avant de l'arbre d'essuie-glace (11).

13. Dispositif à essuie-glace selon l'une des revendications 5 à 12,
**caractérisé en ce que**
l'élément adaptateur (30) possède un support (47) pour attacher le balai d'essuie-glace (45).

14. Ensemble comprenant un dispositif à essuie-glace (10) selon l'une des revendications 1 à 13 et un balai d'essuie-glace (45), dans lequel le balai d'essuie-glace (45) est capable d'être introduit dans un support (47) de l'élément adaptateur (30).
